# EUROPEAN PATENT APPLICATION

(11) **EP 2 672 623 A2**
(43) Date of publication of application: **11.12.2013**
(21) Application number: 13170479.3
(22) Date of filing: 04.06.2013
(51) Int. Cl.: H02P 9/10

(54) **System and method to stabilize power supply**

(30) Priority: 05.06.2012 US 201213488698
(71) Applicant: General Electric Company, Schenectady, New York 12345 (US)
(72) Inventor: Desabhatla, Sreedhar, 85748 Garching bei Munchen (DE)
(74) Representative: Picker, Madeline Margaret

(57) **Abstract**

A system to stabilize power supply includes a turbomachine synchronized to a grid 115. The system also includes a first controller 120 configured to control field excitation of the turbomachine, and a second controller 130 configured to block operation of the first controller 120 based on a rate of the change in frequency of the grid 115.

## Description

The subject matter disclosed herein relates to control systems to stabilize supply from a power plant.

In a turbine power plant, a Power System Stabilizer (PSS) is an automatic control designed to improve synchronous machine stability. The control function is used with field excitation systems. While the control function of the PSS may be implemented in a number of ways, the PSS basically adds damping to power oscillations in the power plant output by affecting field excitation. The PSS helps to maintain system stability during a variety of disturbances. However, when there is a sudden loss of load (e.g., due to a fault on the grid, loss of a transmission line) or sudden demand in load (e.g., due to loss of generation, one or more generators going out of service), the PSS results in large voltage excursions in the wrong direction (i.e., in a way that initially exacerbates the instability in the power system in the generator terminal voltage). Therefore, improved control over the stability of the system would be appreciated in the power industry.

According to an aspect of the invention, a system to stabilize power supply includes a turbomachine synchronized to a grid; a first controller configured to control field excitation of the turbomachine; and a second controller configured to block operation of the first controller based on a rate of the change in frequency of the grid.

According to another aspect of the invention, a method of stabilizing power supply from a turbomachine synchronized with a grid includes controlling field excitation of the turbomachine with a first controller based on a change in frequency of the grid; and blocking operation of the first controller with a second controller based on a rate of the change in frequency of the grid.

According to yet another aspect of the invention, a computer-readable medium stores instructions which, when processed by a processor, cause the processor to perform a method of controlling operation of a controller configured to control field excitation of a turbomachine synchronized with a grid. The method includes determining a rate of change of frequency of the grid; determining a rate of change of an output signal of the controller and a rate of change of terminal voltage of the turbomachine; blocking operation of the controller when the rate of change of frequency of the grid exceeds a predetermined constant and the rate of change of the output signal of the controller and the rate of change of terminal voltage of the turbomachine are in a same direction as the rate of change of frequency of the grid over a first period of time; and resuming operation of the controller when the rate of change of frequency of the grid is lower than the predetermined constant for a second period of time.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram of a power plant system with stability control according to an embodiment of the invention;
FIG. 2 illustrates the increased power system stability achieved with the controller during a sudden loss of power generation according to embodiments of the invention.; and
FIG. 3 illustrates the increased power system stability achieved with the controller during a sudden loss of load according to embodiments of the invention; and
FIG. 4 and FIG. 5 depict processes executed by the controller 130 according to embodiments of the present invention.

The detailed description explains embodiments of the invention, together with advantages and features, by way of example with reference to the drawings.

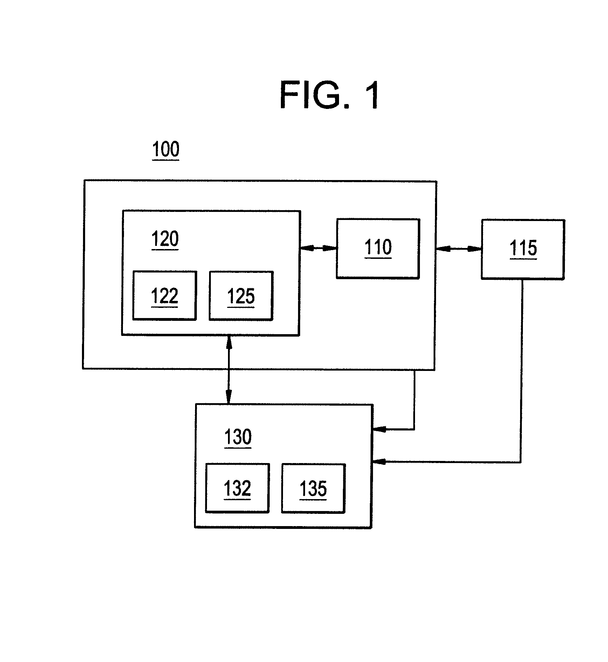

FIG. 1 is a block diagram of a power system 100 with stability control according to an embodiment of the invention. The power system 100 includes a power plant 110 interfaced to a power grid 115. Although one power plant 110 is shown for illustrative purposes, it should be understood that, based on the size of the power grid 115, a number of generators of a number of power plants 110 may supply power to the power grid 115. In alternate embodiments, the power plant 110 includes one or more generators and is a gas, steam, or hydro turbomachine, an engine, or a combined-cycle plant with both gas and steam turbomachines. The Power System Stabilizer (PSS) 120 acts on the field excitation of the synchronous generator of the power plant 110, and the controller 130 acts on the PSS 120 under certain conditions. The PSS 120 includes a memory device 122 and a processor 125, and the controller 130 also includes a memory device 132 and a processor 135. Although a single memory device 122, 132 and single processor 125, 135 are shown for each of the PSS 120 and controller 130, it should be understood that one or more embodiments of the invention contemplate one or more memory devices and one or more processors in communication with each other in each of the PSS 120 and the controller 130.

Because, as noted above, the primary function of the PSS 120 is to add damping to the power oscillations, basic control theory indicates that any signal in which the power oscillations are observable would make a good candidate as an input signal to the PSS 120. Some readily available signals are direct rotor speed measurement, bus frequency, and electrical power. In one sense, the PSS 120 can be viewed as a problem to be solved using multi-variable control design programs. The control design program decides the type of control gains and phase compensation to the applied to each input. Some PSS 120 are based on the principle of accelerating power. But, measurement of accelerating power requires a mechanical power signal. In a practical sense, the mechanical power cannot be measured, so the input signal must be developed from speed and electrical power instead. The integral of accelerating power is a signal that provides machine speed relative to a constant frequency reference. That is, the PSS 120 determines when damping is needed by observing a slip between the rotor speed and grid frequency since the PSS 120 cannot know the grid frequency directly. However, while the PSS 120 provides damping as needed from the perspective of the power plant 110, the control by the PSS 120 can actually cause an initial exacerbation of instability from the perspective of the grid 115 under certain conditions.

When there is a change in the electrical output of a synchronous generator in the power plant 110, caused by a reduction in load on the grid, for example, and there is no accompanying instant mechanical change in the prime mover of the generator, the mismatch in electrical torque and mechanical torque and a resultant rotor angle deviation or swings lead to instability in the power system 100 when the swings are large. The objective of the PSS 120 is to provide a positive contribution to the damping of the generator rotor angle swings, which are in a broad range of frequencies in the power system 100. Without any control acting on a power system 100 in this state, the generator's rotor in the power plant 110 would try to accelerate (in the case of load decrease) or decelerate (in the case of a load increase) to compensate for the mismatch. The rotor action would lead to desynchronization between the power plant 110 and the grid 115, and when the rotor's wings are high and greater than 90 electrical degrees, the result would be a shutdown of the power plant 110.

That is, if the load decreased, the grid frequency would increase. In order to maintain synchronization with the grid 115, the generator's rotor in the power plant 110 would accelerate to match the increased grid frequency. However, because the grid frequency increase was caused by a reduction in load, the rotor acceleration would only increase the output of the power plant 110 for a reduced load on the grid 115, thereby increasing the mismatch and leading to instability of the power system 100. In the opposite situation, if one of the generators of the power plant 110 went offline, for example, the grid frequency would decrease. In order to maintain synchronization with the grid 115, other generators' rotors in the power plant 110 would decelerate to match the reduced grid frequency. However, because the grid frequency decrease was caused by reduced output of the power plant 110 due to the offline generator, the rotor deceleration would only further decrease the output of the power plant 110 and thereby increase the mismatch and instability of the power system 100.

In such situations, the PSS 120 ensures that voltage and frequency oscillations of the power plant 110 are sufficiently damped so that steady state operation can be resumed. Specifically, the PSS 120 adjusts the field excitation, which is directly proportional to terminal voltage of the power plant 110, in order to mitigate the predicted rotor action. That is, the PSS 120 controls field excitation to damp rotor oscillations and indirectly stabilize the rotor but cannot directly control rotor acceleration or deceleration. The PSS 120 is used to supply a component of positive damping torque to offset the negative contribution of the Automatic Voltage Regulator (AVR) of the power plant 110. This results in a compensated system that adds damping and enhances small signal (steady-state) stability by creating a signal in phase with rotor speed and summing the result with the AVR reference. Also, because the generator field circuit and the AVR function have an inherent phase lag, a corresponding phase lead is required to compensate for the effect. The output of the PSS 120 provides a compensated phase (Vc) or voltage adjustment that goes to the AVR.

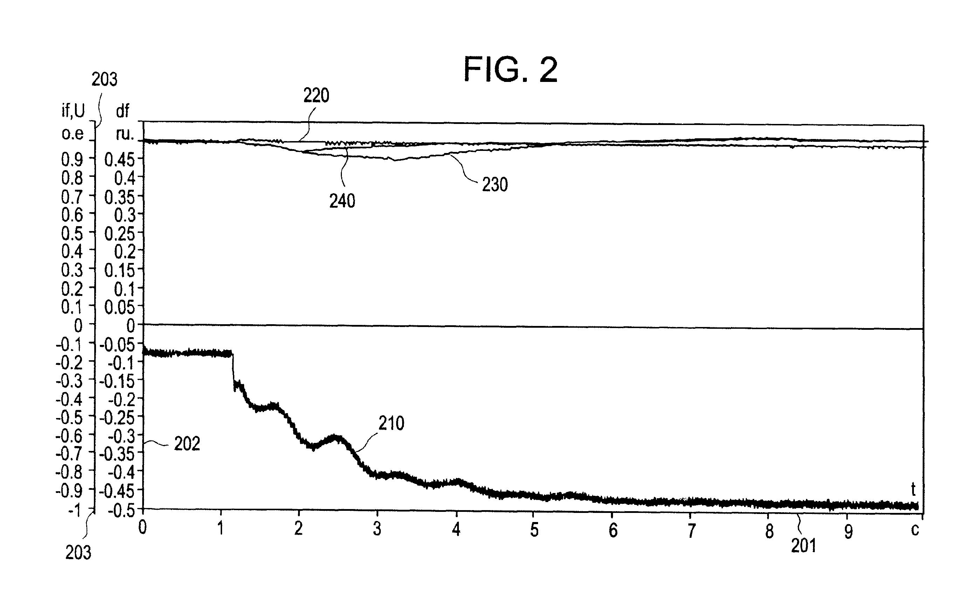

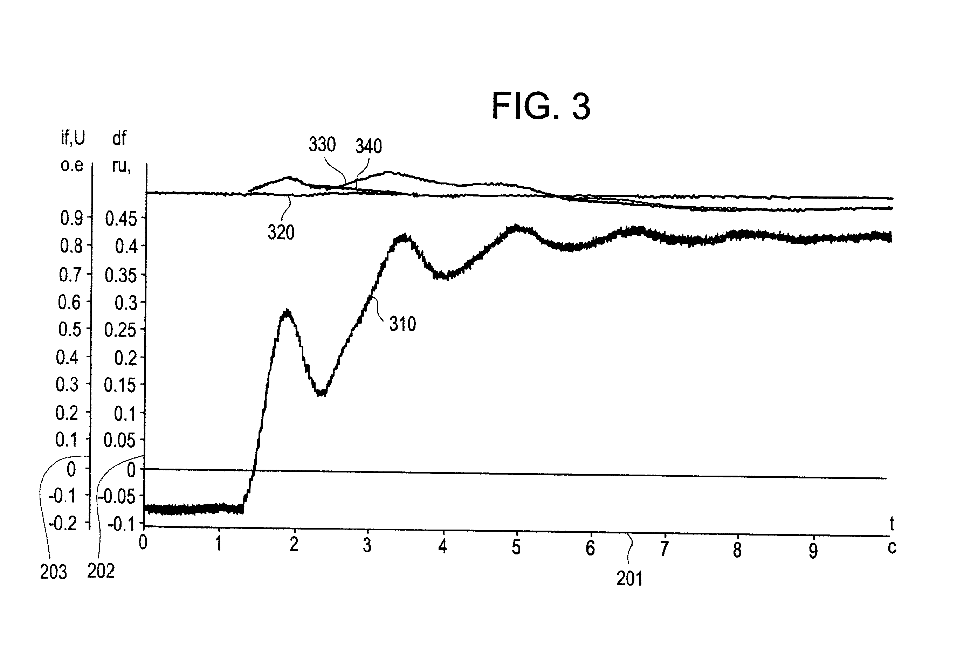

However, if the change in the grid 115 is too severe, such as a load loss rather than a load disturbance, for example, the PSS 120 has been found to exacerbate rather than mitigate the oscillations by drastically changing the terminal voltage to damp the oscillations caused by the rotor action. The stability of the power system 100 is especially affected when there is a loss of generation on the grid 115. In the case of a loss of generation, there is a load pickup by the remaining generators like the power plant 110 and the speed drops. The PSS 120, based on the load pickup by the power plant 110, controls field excitation in a way that drives the rotor to the negative limit (i.e., slows it down). This, in turn, drives the terminal voltage down, which causes a decrease in synchronizing torque resulting in a less stable system. That is, the PSS 120 controls the field excitation in the wrong direction in these extreme cases, because, while the PSS 120 control is correct from the perspective of the power plant 110, the PSS 120 control is in the opposite direction of what is needed from the perspective of the grid 115. In such cases, the PSS 120 operations must be blocked by the controller 130 in order to allow the power system 100 to regain steady state operation faster without further derailing the power system 100 through drastic changes in system voltage and increased voltage oscillations caused by the PSS 120 itself. Any stabilizer will tend to move voltages in the wrong direction to some extent for events like load rejection, loss of generation, and a close three phase fault on the system high voltage (HV) bus near the system. When the PSS 120 is out of service, these voltage excursions are smaller. FIGs. 2 and 3 illustrate the increased power system 100 stability achieved with the controller 130 according to embodiments of the invention.

FIG. 2 illustrates the increased power system 100 stability achieved with the controller 130 during a sudden loss of power generation according to embodiments of the invention. The x-axis 201 indicates time in seconds and the y-axes indicate grid frequency 202 and terminal voltage 203. When the grid frequency 202 (indicated by 210) decreases suddenly due to the loss of a generator, for example, FIG. 2 indicates that, in this particular case, the terminal voltage 203 is most stable without any PSS 120 operation (indicated by 220). With PSS 120 control (indicated by 230), the terminal voltage 203 is controlled in the wrong direction (i.e., is also decreased) for over 3 seconds. However, when the controller 130 acts to block PSS 120 operation, then the exacerbation of the voltage drop because of PSS 120 control is mitigated, as indicated by 240.

FIG. 3 illustrates the increased power system 100 stability achieved with the controller 130 during a sudden loss of load according to embodiments of the invention. The axes of FIG. 3 are labeled the same as the axes of FIG. 2 and indicate the same values. When the grid frequency 202 (indicated by 310) increases suddenly due to a loss of load, for example, FIG. 3 indicates that, in such a case, the terminal voltage 203 is most stable without any PSS 120 operation (indicated by 320). With PSS 120 control (indicated by 330), the terminal voltage 203 is controlled in the wrong direction (i.e., is also increased) for over 4 seconds. However, when the controller 130 acts to block PSS 120 operation, the exacerbation of the voltage increase caused by PSS 120 control is mitigated, as indicated by 340.

While PSS 120 control is undesirable in the situations depicted by FIGs. 2 and 3, PSS 120 control is highly desirable for maintaining power system 100 stability in other situations involving less extreme disturbances. Thus, the controller 130 must block PSS 120 operation when PSS 120 control is detrimental to power system 100 stability but must allow PSS 120 control under other circumstances. In a preferred embodiment, three factors are considered by the controller 130 to determine when PSS 120 operation should be allowed and when PSS 120 operation should be blocked. These factors are: (1) rate of change of grid frequency (Df/DT); (2) rate of change of PSS 120 output (D/DT (PSS)), which indicates the effect of PSS 120 control on the excitation AVR function; and (3) rate of change of terminal voltage (D/DT (voltage)) including whether the change in terminal voltage is in the same direction as the change in grid frequency.

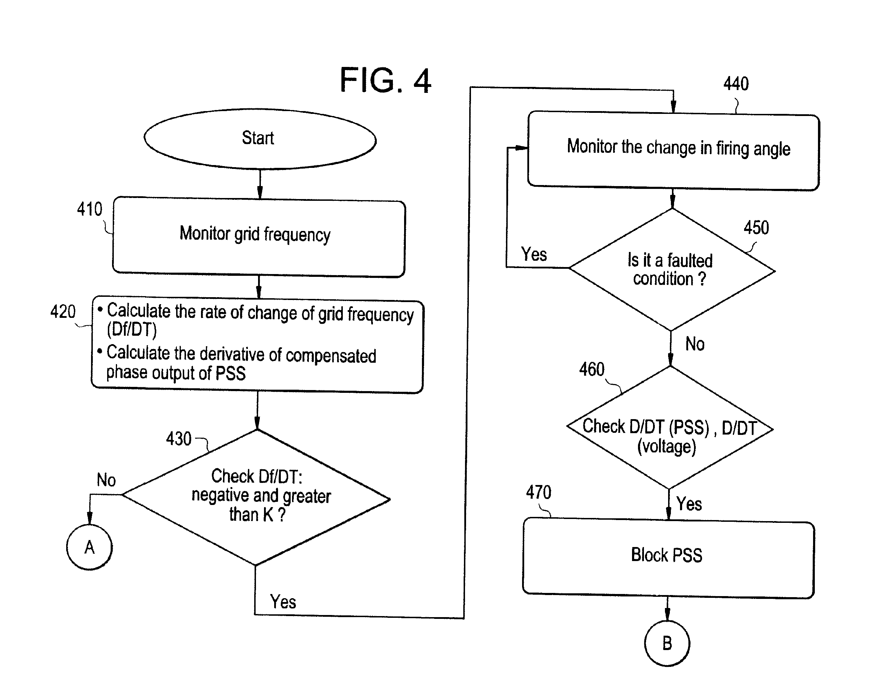

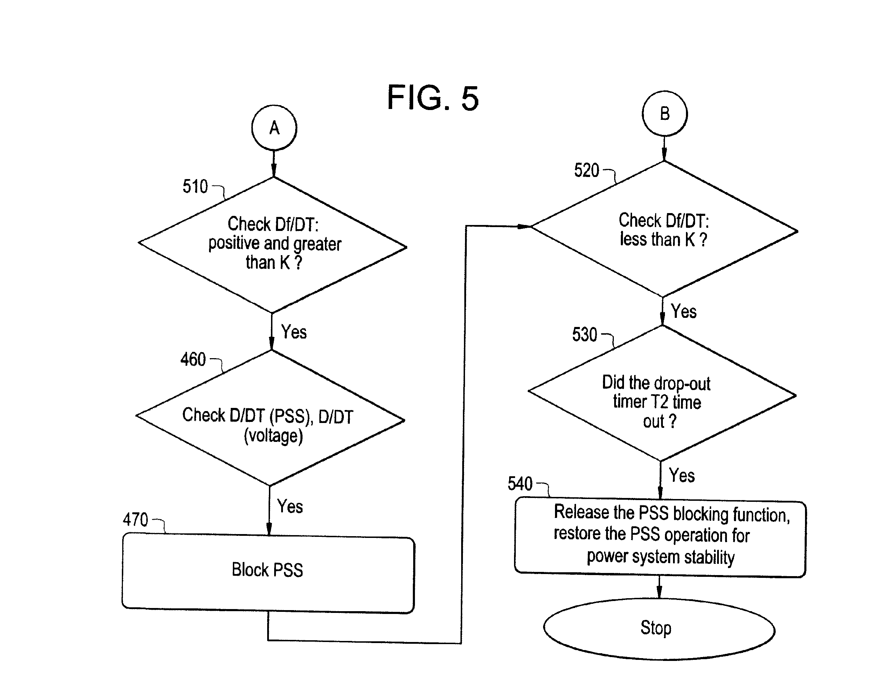

FIGs. 4 and 5 depict processes executed by the controller 130 according to embodiments of the present invention. FIG. 4 highlights the processes of the controller 130 during a sudden loss of power generation. The processes include monitoring grid frequency at 410. At 420, the processes include two calculations. Calculating the rate of change of grid frequency (Df/DT) may be done with a first order lag filter. Calculating the derivative of the compensated phase output of the PSS 120 provides an indication of how the PSS 120 is trying to affect the field excitation and, thereby, the terminal voltage. At 430, the processes include checking the rate of change of grid frequency (Df/DT). Specifically, block 430 includes checking to see if the rate of change of grid frequency (Df/DT) is negative, which provides an indication of whether grid frequency is falling. This may happen when some portion of power generation is lost, as shown in FIG. 2, for example. In addition, block 430 includes checking to see if the rate of change of grid frequency (Df/DT) is not only negative but also greater than a predetermined constant (K). This provides an indication of whether the disruption in power generation is severe enough to effect PSS 120 operation. The value of the constant K may be determined through calculations, modeling, experimentation, grid 115 requirements at the point of common coupling with the power plant 110, and/or a combination thereof. If it is determined at 430 that Df/DT is both negative and in excess of the setpoint constant K, the processes include monitoring the change in firing angle at block 440. Otherwise, processes indicated by A (discussed below) are performed by the controller 130. Monitoring the change in firing angle (of thyristors in the AVR) provides an indication of whether the AVR is trying to compensate for an error signal between the set point and the feedback. At 450, the processes include checking if there is a faulted condition. If a faulted condition is detected at block 450, then monitoring the firing angle (at 440) is resumed to ensure that the fault is addressed. That is, when there is a three phase fault or other transmission line fault close to the generator system, there is too much dragging torque on the machine of the power plant 110 and the PSS 120 is not helpful. Instead, the AVR will recognize the scenario (e.g., 90 degree firing angle indicates sudden short and excitation is insufficient) and the AVR will change the firing angle and fully fire the bridge to correct the situation without any action by the PSS 120. In this situation, the PSS 120 need not be controlled to block its functionality because the PSS 120 has no effect (no benefit but also no detrimental effect) on the operation of the AVR to restore stability. When a faulted condition is not indicated at 450, then the processes include checking the rate of change of PSS 120 output (D/DT (PSS)) and the rate of change of terminal voltage (D/DT (voltage)) at block 460. If D/DT (PSS) and D/DT (voltage) consistently change in the same direction over a given period of time (T1), then the controller 130 determines that the PSS 120 control is decreasing terminal voltage at the same time that grid frequency is decreasing. In this case, the processes include blocking the PSS 120 at 470 by changing the PSS 120 output that goes to the AVR to zero. At this point, additional processes indicated by B and discussed below are executed.

At block 430, if the controller 130 determines that Df/DT is not negative or is not negative and greater than the predetermined constant K, then, as indicated by A, the processes include checking the rate of change of grid frequency (Df/DT) at block 510, shown at FIG. 5. Specifically, block 510 includes checking to see if the rate of change of grid frequency (Df/DT) is positive, which provides an indication of whether grid frequency is rising. This may happen when a load on the grid is lost, as shown in FIG. 3, for example. In addition, block 510 includes checking to see if the rate of change of grid frequency (Df/DT) is not only positive but also greater than the predetermined constant (K). The constant K indicates the point at which the PSS 120 control exacerbates rather than mitigates rotor action during a disturbance in the power system 100. If it is determined at 510 that Df/DT is both positive and in excess of the setpoint constant K, the processes executed by the controller 130 include blocks 460 and 470, discussed above with regard to FIG. 4. Specifically, if checking D/DT (PSS) and D/DT (voltage) at 460 indicates that both values consistently change in the same direction over a given period of time (T1), then the controller 130 determines that the PSS 120 control is acting on field excitation to increase terminal voltage at the same time that grid frequency is increasing. In this case, the controller 130 blocks the PSS 120 operation at 470 by changing the PSS 120 output that goes to the AVR to zero.

When PSS 120 operation is blocked by the controller 130, as described above, the processes indicated by B are executed to determine when to release or un-block the operation of the PSS 120. The processes include checking the rate of change of grid frequency (Df/DT) at 520 to determine when the rate has dropped below the constant K. Once the rate of change of grid frequency has fallen below K, the processes include checking the timer T2 at 530. That is, the processes include determining if the rate of change of grid frequency has remained below K for a period T2. If Df/DT has remained below K for a period T2, the controller 130 releases the PSS 120 blocking function at 540 to restore the PSS 120 operation for power system 100 stability. By executing the above-discussed processes via one or more processors, the controller 130 has the technical effect of enhancing power system 100 stability in situations in which the PSS 120 control alone would increase instability.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system to stabilize power supply, the system comprising:
a turbomachine synchronized to a grid (115);
a first controller (120) configured to control field excitation of the turbomachine; and
a second controller (130) configured to block operation of the first controller (120) based on a rate of the change in frequency of the grid (115).

2. The system according to claim 1, wherein the second controller (130) determines whether the rate of the change in frequency of the grid is negative and exceeds a predetermined constant.

3. The system according to claim 2, wherein the second controller blocks (130) the operation of the first controller (120) when the rate of the change in frequency of the grid is negative and exceeds a predetermined constant while a rate of change of an output of the first controller (120) and a rate of change of terminal voltage of the turbomachine are decreasing over a first period of time.

4. The system according to claim 2 or claim 3, wherein the second controller (130) releases the first controller (120) to resume operation when the rate of the change in frequency of the grid is lower than the predetermined constant for a second period of time.

5. The system according to any preceding claim, wherein the second controller (130) determines whether the rate of the change in frequency of the grid is positive and exceeds a predetermined constant.

6. The system according to claim 5, wherein the second controller (130) blocks the operation of the first controller (120) when the rate of the change in frequency of the grid is positive and exceeds a predetermined constant while a rate of change of an output of the first controller (120) and a rate of change of terminal voltage of the turbomachine are increasing over a first period of time.

7. The system according to claim 5 or claim 6, wherein the second controller (130) releases the first controller (120) to resume operation when the rate of the change in frequency of the grid is lower than the predetermined constant for a second period of time.

8. A method of stabilizing power supply from a turbomachine synchronized with a grid, the method comprising:
controlling field excitation of the turbomachine with a first controller (120) based on a change in frequency of the grid; and
blocking operation of the first controller (120) with a second controller (130) based on a rate of the change in frequency of the grid.

9. The method according to claim 8, further comprising the second controller (130) determining whether the rate of the change in frequency of the grid is negative and exceeds a predetermined constant.

10. The method according to claim 9, wherein the blocking operation of the first controller (120) is done by the second controller (130) when the rate of the change in frequency of the grid is negative and exceeds a predetermined constant while a rate of change of an output of the first controller and a rate of change of terminal voltage of the turbomachine are decreasing over a first period of time.

11. The method according to claim 8, 9 or 10, further comprising releasing the first controller to resume operation when the rate of the change in frequency of the grid is lower than the predetermined constant for a second period of time.

12. The method according to claim 8, 9, 10 or 11, further comprising the second controller (130) determining whether the rate of the change in frequency of the grid is positive and exceeds a predetermined constant.

13. The method according to claim 12, wherein the blocking operation of the first controller (120) is done by the second controller (130) when the rate of the change in frequency of the grid is positive and exceeds a predetermined constant while a rate of change of an output of the first controller and a rate of change of terminal voltage of the turbomachine are increasing over a first period of time.

14. The method according to claim 12 or claim 13, further comprising releasing the first controller (120) to resume operation when the rate of the change in frequency of the grid is lower than the predetermined constant for a second period of time.

15. A computer-readable medium storing instructions which, when processed by a processor, cause the processor to perform a method of controlling operation of a controller configured to control field excitation of a turbomachine synchronized with a grid, the method comprising:
determining a rate of change of frequency of the grid;
determining a rate of change of an output signal of the controller and a rate of change of terminal voltage of the turbomachine;
blocking operation of the controller when the rate of change of frequency of the grid exceeds a predetermined constant and the rate of change of the output signal of the controller and the rate of change of terminal voltage of the turbomachine are in a same direction as the rate of change of frequency of the grid over a first period of time; and
resuming operation of the controller when the rate of change of frequency of the grid is lower than the predetermined constant for a second period of time.
